# FASCICULE DE BREVET EUROPEEN

(11) **EP 3 250 777 B1**
(45) Date de publication et mention de la délivrance du brevet: **05.12.2018**
(21) Numéro de dépôt: 16701522.1
(22) Date de dépôt: 26.01.2016
(51) Int. Cl.: E21B 28/00, E21B 36/04, E21B 43/00, E21B 43/24, E21B 17/00, E21B 17/05, G01V 1/157

(54) **OUTIL DE STIMULATION DE PUITS COMPORTANT UNE LIAISON ARTICULÉE**
BOHRLOCHSTIMULATIONSWERKZEUG MIT GELENKVERBINDUNG
WELLBORE STIMULATION TOOL COMPRISING AN ARTICULATED LINKAGE

(30) Priorité: 27.01.2015 FR 1550600
(43) Date de publication de la demande: 06.12.2017
(73) Titulaire: ENE29 S.àr.l., 2453 Luxembourg (LU)
(72) Inventeur: DELCHAMBRE, Michael, 31100 Toulouse (FR); FERIOL, Laurent, 31650 Lauzerville (FR); ONQUIERT, Guillaume, 31550 Cintegabelle (FR)
(74) Mandataire: Ipside
(86) Numéro de dépôt international: PCT/EP2016/051564
(87) Numéro de publication internationale: WO 2016/120267

(56) Documents cités:
- US-A- 4 753 291
- US-A- 4 997 044
- US-A1- 2001 011 590

## Description

### DOMAINE TECHNIQUE

La présente invention appartient au domaine de la stimulation de puits.

Par « stimulation de puits », on entend générer une onde de choc dans un puits naturel ou de forage. Une stimulation de puits permet notamment d'améliorer la production d'un puits d'extraction de ressource souterraine (pétrole, gaz naturel, eau, etc.), d'effectuer une étude sismologique (par exemple en effectuant des mesures au moyen d'un capteur en surface), de réaliser une fracturation de roche souterraine, etc.

### ÉTAT DE LA TECHNIQUE

Il est connu dans le domaine de la stimulation de puits d'utiliser un outil de forme allongée, adapté à être inséré dans un puits.

Un tel outil comporte une première électrode et une seconde électrode, isolées électriquement l'une de l'autre, s'étendant sensiblement d'une extrémité à l'autre dudit outil. Lesdites première et seconde électrodes forment au niveau d'une extrémité de l'outil une tête de stimulation. La tête de stimulation comporte généralement une chambre destinée à recevoir un fluide, dans laquelle débouchent lesdites première et seconde électrodes. Des exemples de réalisation d'un tel outil sont connus :
- du brevet US4345650, qui décrit un outil mis en oeuvre pour améliorer la production d'un puits d'extraction de ressource souterraine,
- de la demande internationale de brevet WO9013830, qui décrit un outil mis en oeuvre pour effectuer une étude sismologique,
- du brevet US4479680, qui décrit un outil mis en oeuvre pour réaliser une fracturation de roche souterraine.

Lors des opérations de stimulation, l'outil est inséré dans un puits avec la tête de stimulation vers le bas, et est descendue jusqu'au point où la stimulation doit être effectuée. Une fois le point de stimulation atteint, des impulsions de courant électrique de forte intensité (pouvant dépasser quelques dizaines de kilo-ampères) sont envoyées dans la première électrode. Un arc de courant se forme alors, dans la chambre de la tête de stimulation, entre la première électrode et la seconde électrode (généralement reliée à la masse électrique). Ledit arc de courant permet de former une onde de choc qui va stimuler le puits. Par exemple, une telle onde de choc peut permettre de déboucher les performations d'un puits d'extraction.

Dans les domaines pétrolier et gazier, les puits de forage sont généralement sensiblement rectilignes, par exemple verticaux ou horizontaux, mais peuvent également ne pas être rectilignes, par exemple pour contourner un obstacle ou viser une nappe d'hydrocarbure.

On connaît de la demande de brevet US 2001/011590 A1 un outil de stimulation, à insérer dans un puits de forage, comportant plusieurs tronçons reliés par des liaisons articulées permettant de fléchir localement ledit outil de stimulation. Du fait de ces liaisons articulées, un tel outil de stimulation peut être inséré dans un puits de forage non rectiligne. Toutefois, du fait des forts niveaux de tension et de courant nécessaires pour générer l'onde de choc, il existe un risque non négligeable de formation d'arcs électriques à l'intérieur de l'outil de stimulation et/ou au niveau de la liaison articulée.

### EXPOSÉ DE L'INVENTION

La présente invention a pour objectif de remédier à tout ou partie des limitations des solutions de l'art antérieur, notamment celles exposées ci-avant, en proposant une solution qui permette d'avoir un outil de stimulation de puits adapté à être inséré dans un puits non rectiligne, tout en limitant les risques de formation d'arcs électriques à l'intérieur de l'outil de stimulation.

A cet effet, et selon un premier aspect, l'invention concerne un outil électrique de stimulation de puits, comportant une première électrode et une seconde électrode formant au niveau d'une extrémité de l'outil une tête de stimulation, ledit outil comportant au moins un premier tronçon et un second tronçon, ladite seconde électrode étant, au niveau du premier tronçon et du second tronçon, une électrode périphérique isolée électriquement de ladite première électrode. Le premier tronçon et le second tronçon de l'outil sont reliés par une liaison articulée à l'intérieur de laquelle est agencé un câble coaxial s'étendant du premier tronçon au second tronçon, ledit câble coaxial comportant une enveloppe extérieure électriquement conductrice isolée électriquement d'une âme centrale électriquement conductrice. En outre, l'outil comporte :
- au niveau du premier tronçon : des moyens de contact électrique entre l'âme centrale du câble coaxial et la première électrode, et des moyens de contact électrique entre l'enveloppe extérieure dudit câble coaxial et la seconde électrode,
- au niveau du second tronçon : des moyens de contact électrique entre l'âme centrale du câble coaxial et la première électrode, et des moyens de contact électrique entre l'enveloppe extérieure dudit câble coaxial et la seconde électrode.

Ainsi, la première électrode et la seconde électrode sont agencées de sorte que la première électrode correspond à une âme centrale de l'outil, tandis que la seconde électrode est agencée en périphérie de l'outil et entoure ladite première électrode. Un tel agencement permet de maximiser l'écart entre la première électrode et la seconde électrode (et donc les performances de l'isolation électrique entre celles-ci), de sorte que les risques de formation d'arcs électriques à l'intérieur de l'outil de stimulation sont réduits.

En outre, l'outil de stimulation comporte une liaison articulée à l'intérieur de laquelle est agencé un câble coaxial qui est connecté à la première électrode et à la seconde électrode du premier tronçon et du second tronçon. Du fait que le câble coaxial est agencé à l'intérieur de la liaison articulée, aucun courant ne circule à la périphérie de ladite liaison articulée. Ceci est avantageux car si le courant circulait à la périphérie de ladite liaison articulée, cela risquerait d'entraîner un grippage voire une soudure de celle-ci. En outre, l'agencement de l'âme centrale et de l'enveloppe extérieure dans le câble coaxial reproduit sensiblement l'agencement de la première électrode et de la seconde électrode dans le premier tronçon et le second tronçon, et présente donc les mêmes avantages vis-à-vis des forts niveaux de tension et de courant nécessaires pour générer l'onde de choc.

Dans des modes particuliers de réalisation, l'outil de stimulation de puits peut comporter en outre l'une ou plusieurs des caractéristiques suivantes, prises isolément ou selon toutes les combinaisons techniquement possibles.

Dans des modes particuliers de réalisation, l'âme centrale du câble coaxial est séparée de l'enveloppe extérieure par une couche de matériau électriquement isolant, ladite âme centrale et ladite couche de matériau électriquement isolant formant, au niveau du premier tronçon et/ou du second tronçon, des portions du câble coaxial non recouvertes par l'enveloppe extérieure.

De telles dispositions permettent d'avoir des moyens de contact électrique de la première électrode distants des moyens de contact électrique de la seconde électrode, et donc de réduire les risques de formation d'arc électrique entre ceux-ci.

En effet, au niveau de chacun des tronçons, le contact électrique entre l'âme centrale du câble coaxial et la première électrode est réalisé au niveau d'une première zone de contact, et le contact électrique entre l'enveloppe extérieure du câble coaxial et la seconde électrode est réalisé au niveau d'une seconde zone de contact. La première zone de contact se trouve par exemple au niveau de l'extrémité de la portion non recouverte par l'enveloppe extérieure, tandis que la seconde zone de contact se trouve nécessairement au niveau de ladite enveloppe extérieure. Par conséquent, en ajustant la longueur de ladite portion, on assure que la première zone de contact et la seconde de contact sont distantes l'une de l'autre, de préférence d'au moins 5 centimètres, voire d'au moins 10 centimètres, réduisant ainsi les risques de formation d'arc électrique entre la première zone de contact et la seconde zone de contact.

Dans des modes particuliers de réalisation, au niveau du premier tronçon et/ou du second tronçon, le contact électrique entre l'âme centrale du câble coaxial et la première électrode est réalisé au niveau d'une extrémité du câble coaxial électriquement liée à l'âme centrale, et le contact électrique entre l'enveloppe extérieure du câble coaxial et la seconde électrode est réalisé au niveau d'une surface périphérique de ladite enveloppe extérieure.

Dans des modes particuliers de réalisation, chaque surface périphérique de l'enveloppe extérieure est agencée sur un élargissement périphérique de ladite enveloppe extérieure.

Dans des modes particuliers de réalisation, au niveau du premier tronçon et/ou du second tronçon, un matériau électriquement isolant, séparant la première électrode de la seconde électrode, recouvre au moins partiellement chaque portion du câble coaxial non recouverte par l'enveloppe extérieure.

Dans des modes particuliers de réalisation, une extrémité du câble coaxial est mobile en translation à l'intérieur du premier tronçon, et est adaptée à coulisser à l'intérieur dudit premier tronçon sur une longueur de course prédéfinie.

De telles dispositions permettent de limiter les risques que le câble coaxial soit endommagé lors de la flexion de la liaison articulée. En outre, de telles dispositions permettent également d'absorber les modifications de la longueur du câble coaxial par rapport à celle l'outil de stimulation. En effet, un tel outil de stimulation est soumis, lors des opérations de stimulation, à de fortes variations de température qui entraînent une dilatation / rétractation du câble coaxial et/ou de l'outil de stimulation.

Dans des modes particuliers de réalisation, au niveau du premier tronçon, les moyens de contact électrique de l'âme centrale comportent des moyens de maintien adaptés à maintenir la première électrode et l'âme centrale du câble coaxial en contact sur toute la longueur de course, et les moyens de contact électrique entre l'enveloppe extérieure et la seconde électrode sont des moyens de contact glissants en translation.

Dans des modes particuliers de réalisation, l'extrémité du câble coaxial comporte des moyens de butée qui coopèrent avec une paroi d'une cavité interne du premier tronçon de sorte à délimiter la course de ladite extrémité du côté de la liaison articulée.

Dans des modes particuliers de réalisation, le câble coaxial est mobile en rotation à l'intérieur du premier tronçon et les moyens de contact électrique au niveau dudit premier tronçon sont des moyens de contact glissants en rotation.

De telles dispositions permettent de limiter les risques que le câble coaxial soit endommagé, lors de la manipulation de l'outil de stimulation, par une rotation du second tronçon par rapport au premier tronçon.

Dans des modes particuliers de réalisation, les moyens de contact électrique de l'enveloppe extérieure du câble coaxial au niveau du premier tronçon comportent une pièce annulaire entourant ladite enveloppe extérieure et solidaire en rotation avec ledit câble coaxial, ladite pièce annulaire étant en contact glissant avec la seconde électrode du premier tronçon.

Dans des modes particuliers de réalisation, la pièce annulaire comporte plusieurs doigts de contact répartis autour de ladite pièce annulaire, lesdits doigts de contact étant en appui sur une surface interne de la seconde électrode du premier tronçon.

Dans des modes particuliers de réalisation, l'outil de stimulation comporte des moyens de serrage adaptés à maintenir le câble coaxial immobile en rotation et en translation à l'intérieur du second tronçon.

Dans des modes particuliers de réalisation, les moyens de serrage correspondent à des moyens de contact électrique entre l'enveloppe extérieure du câble coaxial et la seconde électrode du second tronçon.

Dans des modes particuliers de réalisation, la liaison articulée est une liaison de type rotule.

Dans des modes particuliers de réalisation, l'outil de stimulation de puits est formé par une pluralité de tronçons assemblés bout à bout de manière réversible.

Selon un second aspect, la présente invention concerne un dispositif de stimulation de puits comportant un outil de stimulation selon l'un quelconque des modes de réalisation de l'invention, et une source électrique connectée audit outil de stimulation.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique en demi-coupe d'un dispositif de stimulation en position dans un puits,
- Figure 2 : une vue partielle d'un exemple de réalisation d'un outil de stimulation au niveau d'une liaison articulée entre un premier tronçon et un second tronçon,
- Figures 3 et 4 : des vues partielles en coupe de l'outil de stimulation de la figure 2, respectivement du côté du premier tronçon et du côté du second tronçon,
- Figures 5 et 6 : des vues partielles en coupe d'un exemple de réalisation d'un câble coaxial à installer dans l'outil de stimulation de la figure 2, respectivement du côté du premier tronçon et du côté du second tronçon,
- Figures 7 à 10 : des vues de détails des figures 3 et 4, représentant des moyens de contact électrique entre le câble coaxial des figures 5 et 6 et les premier et seconds tronçons de l'outil de stimulation.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

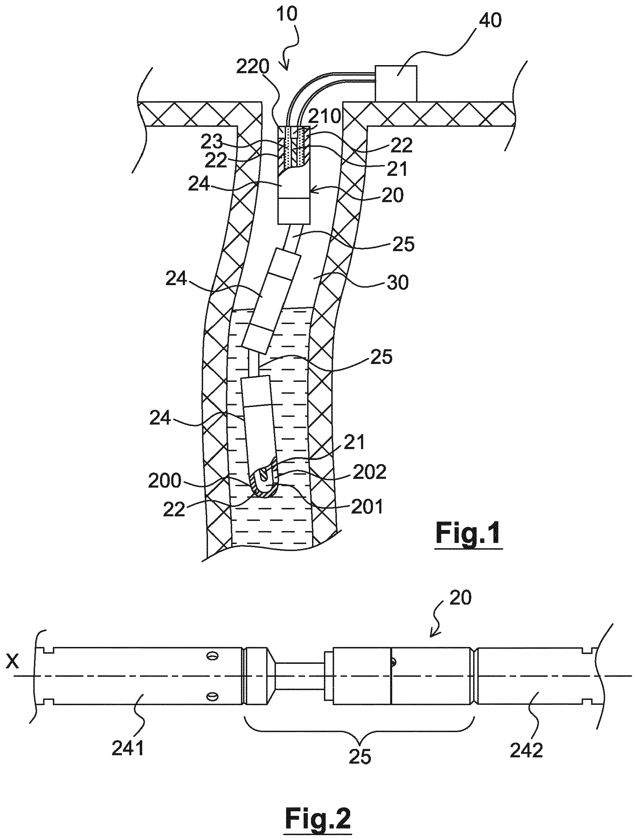

La figure 1 représente schématiquement un exemple de mise en oeuvre d'un dispositif 10 de stimulation de puits selon l'invention.

Dans la suite de la description, on se place de manière non limitative dans le cas d'un dispositif 10 de stimulation mis en oeuvre pour améliorer la production d'un puits d'extraction de ressource souterraine. Toutefois, et tel qu'indiqué précédemment, on entend de manière générale, par « stimulation de puits », générer une onde de choc acoustique dans un puits naturel ou de forage. Une telle stimulation de puits peut être mise en oeuvre pour améliorer la production d'un puits d'extraction de ressource souterraine, mais également pour effectuer une étude sismologique, pour réaliser une fracturation de roche souterraine, etc.

Tel qu'illustré par la figure 1, le dispositif 10 de stimulation comporte un outil 20, de forme allongée, adapté à être introduit dans un puits 30 d'extraction obtenu par forage. L'outil 20 peut par exemple être formé par une pluralité de tronçons assemblés bout à bout de manière réversible.

Plus particulièrement, la figure 1 représente une vue en demi-coupe de l'outil 20, dans laquelle les deux extrémités dudit outil 20 sont représentées en coupe. L'outil 20 comporte notamment, au niveau d'une première extrémité, une tête de stimulation 200, introduite vers le bas dans le puits 30 d'extraction, et une seconde extrémité opposée à ladite tête de stimulation 200.

La tête de stimulation 200 comporte par exemple une cavité 201 fermée à l'intérieur de laquelle débouchent une première électrode 21 et une seconde électrode 22 de l'outil 20. La première électrode 21 et la seconde électrode 22 sont par exemple séparées par un fluide confiné à l'intérieur de la cavité 201. La cavité 201 est par exemple fermée par une paroi 202 flexible séparant le fluide, à l'intérieur de la cavité 201, et la ressource souterraine en fond de puits. Rien n'exclut, suivant d'autres exemples, d'avoir une tête de stimulation 200 avec une cavité ouverte, auquel cas le fluide à l'intérieur de la cavité est la ressource souterraine en fond de puits.

La première électrode 21 et la seconde électrode 22 s'étendent jusqu'à la seconde extrémité de l'outil 20, jusqu'à respectivement une première borne 210 et une seconde borne 220 dudit outil 20. Le dispositif 10 de stimulation comporte en outre une source électrique 40 connectée à la première borne 210 et à la seconde borne 220 de l'outil 20. Dans l'exemple non limitatif illustré par la figure 1, la source électrique 40 est externe à l'outil 20 et est connectée à la première borne 210 et à la seconde borne 220 par l'intermédiaire d'un ou de plusieurs câbles électriques. Rien n'exclut, suivant d'autres exemples, d'avoir une source électrique 40 intégrée en tout ou partie dans l'outil 20.

Tel qu'illustré par la figure 1, l'outil 20 comporte également plusieurs liaisons articulées 25 reliant différents tronçons 24 dudit outil 20. Ainsi, l'outil 20 peut être fléchi localement au niveau de chaque liaison articulée 25, et peut être inséré dans un puits de forage non rectiligne.

La figure 2 représente schématiquement une vue partielle d'un exemple de réalisation d'un outil 20 de stimulation comportant une liaison articulée 25 reliant un premier tronçon 241 et un second tronçon 242. Tel qu'illustré par la figure 2, l'outil 20 s'étend sensiblement suivant un axe X longitudinal, désigné ci-après par « axe principal » de l'outil 20.

Dans l'outil 20, la première électrode 21 et la seconde électrode 22 sont isolées électriquement l'une de l'autre par un matériau 23 électriquement isolant. En outre, et tel qu'indiqué précédemment, la seconde électrode 22 est de préférence agencée à la périphérie de l'outil 20, tandis que la première électrode 21 est de préférence agencée au centre de l'outil 20. Dans un tel cas, la première électrode 21 est par exemple une tige en laiton, formant une âme centrale de l'outil 20, tandis que la seconde électrode 22 correspond à la paroi extérieure de l'outil 20, et est par exemple un tube en acier. Ainsi, la seconde électrode 22 entoure le matériau 23 électriquement isolant, lequel entoure la première électrode 21.

Tel qu'indiqué précédemment un tel agencement de la première électrode 21 et de la seconde électrode 22 dans l'outil 20 est souhaitable, en particulier dans le premier tronçon 241 et dans le second tronçon 242, pour éviter la formation d'arcs électriques à l'intérieur de l'outil 20, compte tenu des forts niveaux de courant et de tension considérés.

Toutefois, un tel agencement ne peut pas nécessairement être conservé sur toute la longueur de l'outil 20. Notamment, un tel agencement de la première électrode 21 et de la seconde électrode 22 ne peut pas être conservé au niveau de la liaison articulée 25, pour éviter notamment de risquer de gripper voire de souder ladite liaison articulée 25 lors de la circulation du courant dans la seconde électrode 22.

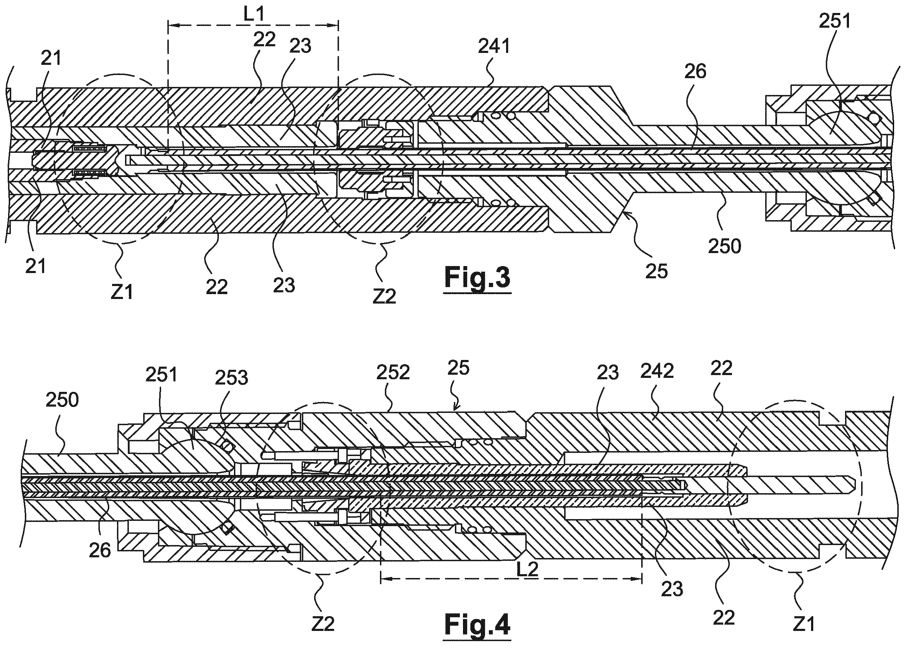

Les figures 3 et 4 représentent des vues partielles en coupe de l'outil 20 illustré par la figure 2. Plus particulièrement, la figure 3 représente partiellement le premier tronçon 241 et la liaison articulée 25, tandis que la figure 4 représente partiellement ladite liaison articulée 25 et le second tronçon 242. Au niveau du premier tronçon 241 et du second tronçon 242, la première électrode 21 est agencée sensiblement au centre de l'outil 20, tandis que la seconde électrode 22 est agencée à la périphérie de l'outil 20 et entoure ladite première électrode 21.

Dans l'exemple non limitatif illustré par les figures 3 et 4, la liaison articulée 25 et une liaison de type rotule, c'est-à-dire une liaison à trois degrés de liberté en rotation et à trois degrés de liaison en translation (en d'autres termes, la liaison articulée 25 ne permet aucun mouvement en translation). L'invention est toutefois applicable dès lors que la liaison articulée 25 comporte au moins un degré de liberté en rotation autorisant une flexion de l'outil 20.

La liaison articulée 25 comporte principalement deux éléments :
- un premier élément 250 de forme globalement allongée, élargie au niveau d'une extrémité de sorte à former une rotule 251,
- un second élément 252 comportant un logement 253, de forme géométriquement adaptée à celle de la rotule 251, et dans lequel ladite rotule 251 peut tourner.

Dans l'exemple non limitatif illustré par les figures 3 et 4, la rotule 251 peut tourner librement autour de l'axe principal de l'outil 20, suivant lequel le premier tronçon 241 et le second tronçon 242 tournent l'un par rapport à l'autre en restant alignés. La rotation de la rotule 251 suivant les autres axes, qui correspondent à des axes de flexion de la liaison articulée 25, est par contre limitée à des plages d'angles prédéfinies, permettant par exemple une flexion maximale de 10° du premier tronçon 241 par rapport au second tronçon 242.

Tel qu'illustré par les figures 3 et 4, le premier élément 250 et le second élément 252 comportent des conduits internes respectifs, sensiblement alignés, qui forment conjointement un conduit interne qui s'étend suivant l'axe principal de l'outil 20, d'une extrémité à l'autre de la liaison articulée 25.

L'outil 20 de stimulation comporte en outre un câble coaxial 26 flexible agencé à l'intérieur du conduit interne de la liaison articulée 25. Ledit câble coaxial 26 s'étend du premier tronçon 241 au second tronçon 242 de l'outil 20.

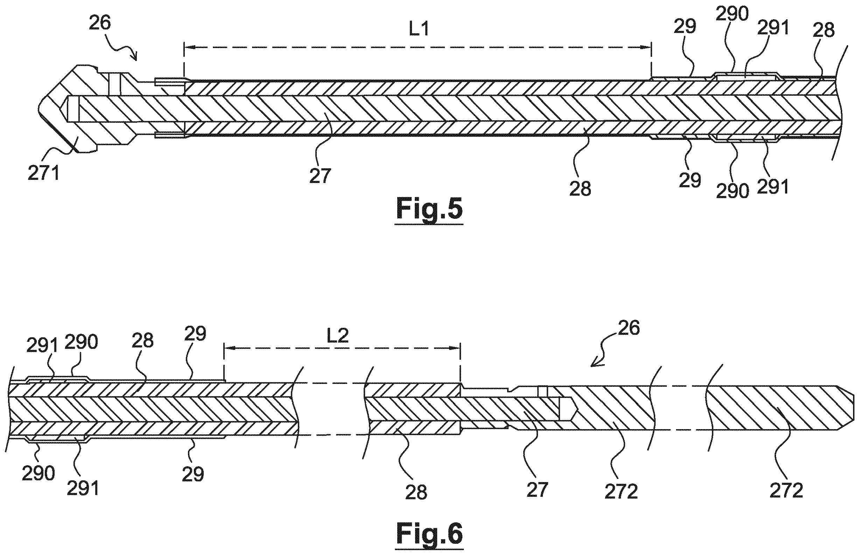

Les figures 5 et 6 représentent schématiquement des vues partielles en coupe d'un exemple de réalisation d'un câble coaxial 26. Plus particulièrement, la figure 5 représente une extrémité du câble coaxial 26 destinée à être agencée du côté du premier tronçon 241, tandis que la figure 6 représente l'autre extrémité dudit câble coaxial, destinée à être agencée du côté du second tronçon 242.

Tel qu'illustré par les figures 5 et 6, le câble coaxial 26 de l'outil 20 comporte une âme centrale 27 électriquement conductrice (par exemple un conducteur souple en cuivre. Le câble coaxial comporte également une couche 28 en matériau électriquement isolant (par exemple en silicone) entourant l'âme centrale 27, et une enveloppe extérieure 29 électriquement conductrice (par exemple une tresse métallique souple), entourant la couche 28 en matériau électriquement isolant.

L'âme centrale 27 du câble coaxial est destinée à être reliée électriquement à la première électrode 21 de l'outil 20, tandis que l'enveloppe extérieure 29 est destinée à être reliée électriquement à la seconde électrode 22 de l'outil 20. L'outil 20 comporte à cet effet :
- à l'intérieur du premier tronçon 241 : des moyens de contact électrique entre l'âme centrale 27 du câble coaxial 26 et la première électrode 21, et des moyens de contact électrique entre l'enveloppe extérieure 29 dudit câble coaxial 26 et la seconde électrode 22,
- à l'intérieur du second tronçon 242 : des moyens de contact électrique entre l'âme centrale 27 du câble coaxial 26 et la première électrode 21, et des moyens de contact électrique entre l'enveloppe extérieure 29 dudit câble coaxial 26 et la seconde électrode 22.

Dans des modes préférés de réalisation, et tel qu'illustré par les figures 3 à 6, l'âme centrale 27 et la couche 28 en matériau électriquement isolant sont de longueurs respectives, mesurées suivant l'axe principal de l'outil 20, supérieures à la longueur de l'enveloppe extérieure 29. En outre, ladite âme centrale 27 et ladite couche 28 en matériau électriquement isolant sont agencées de sorte à former, au niveau du premier tronçon 241 et du second tronçon 242, des portions du câble coaxial 26 qui ne sont pas recouvertes par l'enveloppe extérieure 29. Un tel agencement est toutefois optionnel, ou peut n'être réalisé que d'un seul côté du câble coaxial 26.

De telles dispositions permettent d'assurer qu'une première zone Z1 de contact entre l'âme centrale 27 et la première électrode 21 du premier tronçon 241 (respectivement second tronçon 242) et une seconde zone Z2 de contact entre l'enveloppe extérieure 29 et la seconde électrode du premier tronçon 241 (respectivement second tronçon 242) sont à distance l'une de l'autre.

En effet, tel qu'illustré par les figures 5 et 6, l'âme centrale 27 du câble coaxial 26 est par exemple de longueur supérieure à celle de la couche 28 en matériau électriquement isolant et forme, au niveau du premier tronçon 241 et du second tronçon 242, des portions du câble coaxial, qui ne sont recouvertes ni par ladite couche 28 en matériau électriquement isolant ni par l'enveloppe extérieure 29. Dans l'exemple non limitatif illustré par les figures 5 et 6, le câble coaxial 26 comporte des pièces 271, 272 électriquement conductrices fixées à l'âme centrale 27, qui forment les extrémités dudit câble coaxial par lesquelles l'âme centrale 27 est reliée électriquement à la première électrode 21 de l'outil 20. Du côté du premier tronçon 241 (respectivement second tronçon 242), on constate que la distance minimale entre la première zone Z1 de contact et la seconde zone Z2 de contact correspond sensiblement à la longueur L1 (respectivement longueur L2) sur laquelle la couche 28 en matériau électriquement isolant n'est pas recouverte par l'enveloppe extérieure 29. Les longueurs L1 et L2 sont de préférence supérieures à 5 centimètres (cm), voire supérieures à 10 cm, pour limiter les risques de formation d'arcs électriques entre la première zone Z1 de contact et la seconde zone Z2 de contact.

De préférence, et tel qu'illustré par les figures 3 et 4, le matériau 23 électriquement isolant de l'outil 20 recouvre, au niveau du premier tronçon 241 et du second tronçon 242, au moins partiellement les portions du câble coaxial 26 non recouvertes par l'enveloppe extérieure 29. Ainsi, les risques de formation d'arcs électriques sont encore réduits grâce à une isolation électrique renforcée entre les premières zones Z1 de contact et les secondes zones Z2 de contact (c'est-à-dire entre les moyens de contact électrique de l'âme centrale 27 et ceux de l'enveloppe extérieure 29).

Dans les exemples non limitatifs illustrés par les figures 3 à 6, les secondes zones Z2 de contact sont formées par des surfaces périphériques 290 de l'enveloppe extérieure 29. Rien n'exclut cependant, suivant d'autres exemples, de considérer des secondes zones Z2 de contact ne s'étendant pas sur toute la périphérie de l'enveloppe extérieure 29, c'est-à-dire ne s'étendant pas sur toute la circonférence de ladite enveloppe extérieure.

Tel qu'illustré par les figures 5 et 6, chaque surface périphérique 290 peut être agencée avantageusement sur un élargissement périphérique de l'enveloppe extérieure 29, par exemple obtenu en intercalant une virole 291 entre la couche 28 en matériau électriquement isolant et ladite enveloppe extérieure 29. Dans un tel cas, l'enveloppe extérieure 29 comporte une surépaisseur qui permet de faciliter le contact électrique entre ladite enveloppe extérieure 29 et la seconde électrode 22.

Dans des modes particuliers de réalisation, le câble coaxial 26 est entouré par une gaine en matériau électriquement isolant. Une telle gaine permet notamment d'isoler électriquement le câble coaxial 26 de la liaison articulée 25, mais également de protéger l'enveloppe extérieure 29. Dans un tel cas, la gaine est interrompue au niveau des surfaces périphériques 290, qui ne sont donc pas recouvertes.

Dans des modes préférés de réalisation, au moins une extrémité du câble coaxial 26 est mobile en translation et/ou en rotation à l'intérieur du premier tronçon et/ou du second tronçon 242. En effet, en autorisant une certaine mobilité d'au moins une des extrémités du câble coaxial 26, celui-ci sera soumis à des efforts moins importants, notamment lorsque la liaison articulée 25 est fléchie, et/ou en cas dilatation / rétractation du câble coaxial 26 ou de l'outil 20 de stimulation.

Dans l'exemple non limitatif illustré par les figures 3 et 4, le câble coaxial 26 est solidaire en translation et en rotation avec le second tronçon 242, par contre ledit câble coaxial 26 est mobile à la fois en translation et en rotation par rapport au premier tronçon 241.

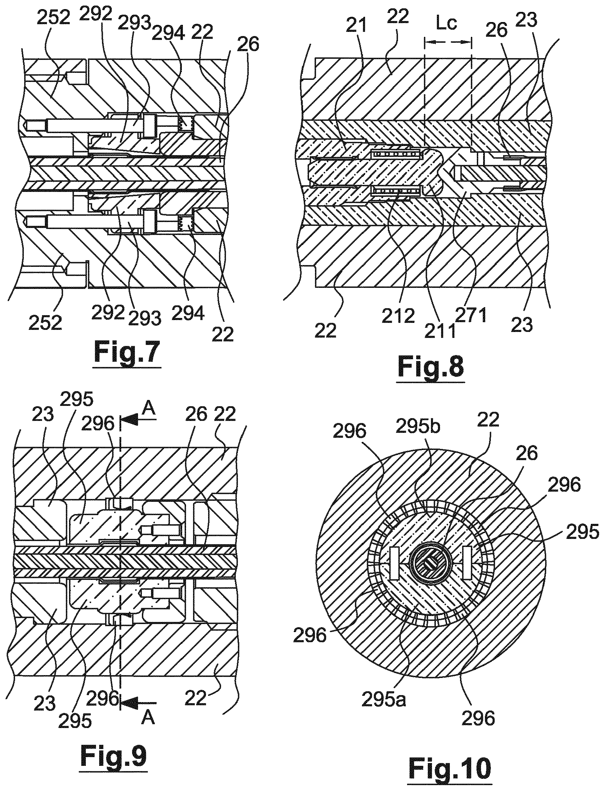

En effet, tel qu'illustré par la figure 4 et, de manière plus détaillée, par la figure 7, l'outil 20 comporte des moyens de serrage du câble coaxial 26 qui maintiennent ledit câble coaxial immobile en rotation et en translation à l'intérieur du second tronçon 242.

Dans l'exemple illustré par les figures 4 et 7, les moyens de serrage comportent des pinces 292 en appui sur la surface périphérique 290 de l'enveloppe extérieure 29 du câble coaxial 26, et contribuent également à établir un contact électrique entre ladite enveloppe extérieure 29 et la seconde électrode 22 du second tronçon 242. Rien n'exclut cependant, suivant d'autres exemples, d'avoir des moyens de serrage du câble coaxial qui ne remplissent pas de fonction électrique au sein de l'outil 20. Les pinces 292 sont par exemple fixées au second élément 252 de la liaison articulée 25, par exemple au moyen de vis 293 qui contribuent également à serrer lesdites pinces sur le câble coaxial 26. Le second élément 252 est fixé au second tronçon 242 par tout moyen adapté, par exemple vissé sur celui-ci.

Dans l'exemple illustré par les figures 4 et 7, les moyens de contact électrique sont complétés par un joint 294 conducteur (ou un ressort métallique ou tout autre moyen adapté) agencé entre les vis 293 et la seconde électrode 22 du second tronçon 242.

Le contact électrique entre l'âme centrale 27 du câble coaxial 26 et la première électrode 21 du second tronçon 242 est par exemple réalisé au moyen de la pièce 272 fixée à l'extrémité de ladite âme centrale 27, et par un manchon (non représenté sur les figures) de ladite première électrode 21, à l'intérieur duquel est engagée ladite pièce 272. De préférence, le contact électrique entre ladite pièce 272 et l'intérieur du manchon est assuré par des lames à mémoire de forme, un ressort hélicoïdal ou encore des clinquants.

Tel qu'indiqué précédemment, dans l'exemple non limitatif illustré par les figures 3 et 4, le câble coaxial 26 est mobile à la fois en translation et en rotation par rapport au premier tronçon 241. L'extrémité du câble coaxial 26 est adaptée à coulisser à l'intérieur dudit premier tronçon 241 sur une longueur Lc de course prédéfinie. La longueur Lc de course est choisie pour permettre la flexion de la liaison articulée 25 sur les plages d'angles souhaitées et, de préférence, en tenant compte de possibles dilatations / rétractations de l'outil 20 et/ou du câble coaxial 26, liées aux fortes variations de température.

La figure 8 représente schématiquement une vue détaillée d'un exemple de réalisation des moyens de contact électrique entre l'âme centrale 27 du câble coaxial 26 et la première électrode 21 du premier tronçon 241.

Dans l'exemple non limitatif illustré par la figure 8, la première électrode 21 comporte une partie mobile 211 en translation suivant l'axe principal de l'outil 20 en appui bout à bout contre la pièce 271 formant l'extrémité de l'âme centrale 27 du côté du premier tronçon 241. Ladite partie mobile 211 et ladite pièce 271 sont en contact glissant en rotation suivant l'axe principal de l'outil 20. En outre, dans cet exemple de réalisation, les moyens de contact électrique comportent également des moyens de maintien, tel qu'un ressort 212, adaptés à maintenir la partie mobile 211 et la pièce 271 en contact sur toute la longueur Lc de course de l'extrémité de l'âme centrale 27 à l'intérieur du premier tronçon 241. Le ressort 212 assure par exemple également le contact électrique entre la partie mobile 211 et le reste de la première électrode 21 du premier tronçon 241.

Tel qu'illustré par les figures 6 et 8, la pièce 271 formant l'extrémité de l'âme centrale 27 au niveau du premier tronçon 241 est par exemple de diamètre maximal supérieur au diamètre du câble coaxial 26. En outre, le premier tronçon 241 comporte une cavité interne, par exemple délimitée en partie par le matériau 23 électriquement isolant, à l'intérieur de laquelle coulisse ladite pièce 271. Ladite cavité interne comporte une paroi sur laquelle ladite pièce 271 vient buter en limite de course du côté de la liaison articulée 25. Il est à noter que cette fonction de butée, exercée par la pièce 271, peut alternativement être réalisée par d'autres moyens, comme par exemple au moyen d'un élargissement de la couche 28 en matériau électriquement isolant. De l'autre côté, la pièce 271 peut coulisser jusqu'à une position maximale correspondant à la position occupée, en l'absence de flexion de la liaison articulée 25, lorsque les conditions opérationnelles sont les plus défavorables en termes de dilatation / rétractation de l'outil 20 et du câble coaxial 26.

La figure 9 représente schématiquement une vue détaillée d'un exemple de réalisation des moyens de contact électrique entre l'enveloppe extérieure 29 du câble coaxial 26 et la seconde électrode 22 du premier tronçon 241. La figure 10 représente une vue en coupe desdits moyens de contact électrique, selon le plan de coupe A-A représenté sur la figure 9.

Tel qu'illustré par les figures 9 et 10, les moyens de contact électrique de l'enveloppe extérieure 29 du câble coaxial 26 au niveau du premier tronçon 241 comportent par exemple une pièce annulaire 295 entourant ladite enveloppe extérieure au niveau de la surface périphérique 290. La pièce annulaire 295 comporte par exemple deux demi-anneaux 295a, 295b fixés l'un à l'autre par des vis et enserrant l'enveloppe extérieure 29 du câble coaxial 26. La pièce annulaire 295 ainsi assemblée sur le pourtour de la surface périphérique 290 est solidaire en rotation avec ledit câble coaxial 26. En outre, la pièce annulaire 295, en matériau électriquement conducteur, est électriquement liée à l'enveloppe extérieure 29 du câble coaxial 26.

Dans l'exemple non limitatif illustré par les figures 9 et 10, la pièce annulaire 295 comporte en outre plusieurs doigts 296 de contact répartis de préférence de manière régulière sur le pourtour de ladite pièce annulaire 295. Lesdits doigts 296 de contact sont en appui sur une surface interne de la seconde électrode 22 du premier tronçon 241 qui, tel qu'illustré par la figure 10, entoure ladite pièce annulaire 295. Lesdits doigts 296 de contact exercent sur la seconde électrode 22 un effort radial qui maintient le contact électrique entre la pièce annulaire 295 et la seconde électrode 22 du premier tronçon 241. Du fait des doigts 296 de contact, la pièce annulaire 295 est en contact glissant en translation et en rotation avec la seconde électrode 22 du premier tronçon 241. Rien n'exclut cependant, suivant d'autres exemples, d'utiliser d'autres types de contacts glissants entre la pièce annulaire 295 et la seconde électrode 22.

Tel qu'indiqué précédemment, les moyens de contact glissants en translation permettent de limiter les risques d'endommagement du câble coaxial 26 lors de la flexion de la liaison articulée 25, et également d'absorber les modifications de la longueur du câble coaxial 26 par rapport à celle l'outil 20 de stimulation.

Les moyens de contact glissants en rotation permettent également de limiter les risques d'endommagement du câble coaxial 26 lors de la manipulation de l'outil 20 de stimulation, en particulier lors de son introduction dans le puits 30. En effet, le second tronçon 242 peut dans certains cas tourner par rapport au premier tronçon 241. Dans un tel cas, grâce au contact glissant en rotation, aucune torsion ne sera appliquée sur le câble coaxial 26.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant des exemples particuliers de réalisation des différents moyens de contact électrique, glissants ou non. On comprend que d'autres exemples de réalisation sont possibles et que, de manière plus générale, tout moyen de contact électrique adapté peut être mis en oeuvre pour assurer la continuité électrique, par l'intermédiaire du câble coaxial 26, entre la première électrode 21 et la seconde électrode 22 du premier tronçon 241 et du second tronçon 242.

## Revendications

1. Outil (20) électrique de stimulation de puits (30), comportant une première électrode (21) et une seconde électrode (22) formant au niveau d'une extrémité de l'outil une tête (200) de stimulation, ledit outil (20) comportant au moins un premier tronçon (241) et un second tronçon (242), le premier tronçon et le second tronçon étant reliés par une liaison articulée (25), **caractérisé en ce que** ladite seconde électrode est, au niveau du premier tronçon et du second tronçon, une électrode périphérique isolée électriquement de ladite première électrode, et **en ce qu'**un câble coaxial (26) est agencé à l'intérieur de la liaison articulée (25), ledit câble coaxial s'étendant du premier tronçon (241) au second tronçon (242), ledit câble coaxial comportant une enveloppe extérieure (29) électriquement conductrice isolée électriquement d'une âme centrale (27) électriquement conductrice, l'outil (20) comportant :
- au niveau du premier tronçon : des moyens de contact électrique entre l'âme centrale (27) du câble coaxial et la première électrode (21), et des moyens de contact électrique entre l'enveloppe extérieure (29) dudit câble coaxial et la seconde électrode (22),
- au niveau du second tronçon : des moyens de contact électrique entre l'âme centrale (27) du câble coaxial et la première électrode (21), et des moyens de contact électrique entre l'enveloppe extérieure (29) dudit câble coaxial et la seconde électrode (22).

2. Outil (20) selon la revendication 1, dans lequel l'âme centrale (27) du câble coaxial (26) est séparée de l'enveloppe extérieure (29) par une couche (28) en matériau électriquement isolant, ladite âme centrale et ladite couche en matériau électriquement isolant formant, au niveau du premier tronçon (241) et/ou du second tronçon (242), des portions du câble coaxial non recouvertes par l'enveloppe extérieure.

3. Outil (20) selon la revendication 2, dans lequel, au niveau du premier tronçon (241) et/ou du second tronçon (242), le contact électrique entre l'âme centrale (27) du câble coaxial (26) et la première électrode (21) est réalisé au niveau d'une extrémité (271, 272) du câble coaxial (26) électriquement liée à l'âme centrale (27), et le contact électrique entre l'enveloppe extérieure (29) du câble coaxial (26) et la seconde électrode (22) est réalisé au niveau d'une surface périphérique (290) de ladite enveloppe extérieure.

4. Outil (20) selon la revendication 3, dans lequel chaque surface périphérique (290) de l'enveloppe extérieure (29) est agencée sur un élargissement périphérique de ladite enveloppe extérieure.

5. Outil (20) selon l'une des revendications 2 à 4, dans lequel, au niveau du premier tronçon (241) et/ou du second tronçon (242), un matériau électriquement isolant (23), séparant la première électrode (21) de la seconde électrode (22), recouvre au moins partiellement chaque portion du câble coaxial non recouverte par l'enveloppe extérieure (29).

6. Outil (20) selon l'une des revendications précédentes, dans lequel une extrémité du câble coaxial (26) est mobile en translation à l'intérieur du premier tronçon (241), et est adaptée à coulisser à l'intérieur dudit premier tronçon sur une longueur de course (Lc) prédéfinie.

7. Outil (20) selon la revendication 6, dans lequel, au niveau du premier tronçon (241), les moyens de contact électrique de l'âme centrale (27) comportent des moyens de maintien (212) adaptés à maintenir la première électrode (21) et l'âme centrale (27) du câble coaxial (26) en contact sur toute la longueur de course (Lc), et les moyens de contact électrique de l'enveloppe extérieure (29) sont des moyens de contact glissants en translation.

8. Outil (20) selon l'une des revendications 6 à 7, dans lequel l'extrémité du câble coaxial (26) comporte des moyens de butée qui coopèrent avec une paroi d'une cavité interne du premier tronçon (241) de sorte à délimiter la course de ladite extrémité du côté de la liaison articulée (25).

9. Outil (20) selon l'une des revendications précédentes, dans lequel le câble coaxial (26) est mobile en rotation à l'intérieur du premier tronçon (241) et les moyens de contact électrique au niveau dudit premier tronçon sont des moyens de contact glissants en rotation.

10. Outil (20) selon l'une des revendications 6 à 9, dans lequel les moyens de contact électrique de l'enveloppe extérieure (29) du câble coaxial (26) au niveau du premier tronçon (241) comportent une pièce annulaire (295) entourant ladite enveloppe extérieure et solidaire en rotation avec ledit câble coaxial, ladite pièce annulaire étant en contact glissant avec la seconde électrode (22) du premier tronçon (241).

11. Outil (20) selon la revendication 10, dans lequel la pièce annulaire (295) comporte plusieurs doigts (296) de contact répartis autour de ladite pièce annulaire, lesdits doigts de contact étant en appui sur une surface interne de la seconde électrode (22) du premier tronçon (241).

12. Outil (20) selon l'une des revendications précédentes, comportant des moyens de serrage adaptés à maintenir le câble coaxial (26) immobile en rotation et en translation à l'intérieur du second tronçon (242).

13. Outil (20) selon l'une des revendications précédentes, dans lequel la liaison articulée (25) est une liaison de type rotule.

14. Outil (20) selon l'une des revendications précédentes, formé par une pluralité de tronçons assemblés bout à bout de manière réversible.

15. Dispositif (10) de stimulation de puits (30), **caractérisé en ce qu'**il comporte un outil (20) selon l'une des revendications précédentes, et une source électrique (40) connectée audit outil de stimulation.

## Patentansprüche

1. Elektrisches Werkzeug (20) zur Stimulation von Bohrlöchern (30), umfassend eine erste Elektrode (21) und eine zweite Elektrode (22), die im Bereich eines Endes des Werkzeugs einen Stimulationskopf (200) bilden, wobei das Werkzeug (20) mindestens ein erstes Teilstück (241) und ein zweites Teilstück (242) umfasst, wobei das erste Teilstück und das zweite Teilstück über eine Gelenkverbindung (25) verbunden sind, **dadurch gekennzeichnet, dass** die zweite Elektrode im Bereich des ersten Teilstücks und des zweiten Teilstücks eine Umfangselektrode ist, die elektrisch von der ersten Elektrode isoliert ist, und dadurch, dass ein Koaxialkabel (26) im Inneren der Gelenkverbindung (25) angeordnet ist, wobei sich das Koaxialkabel vom ersten Teilstück (241) zum zweiten Teilstück (242) erstreckt, wobei das Koaxialkabel eine elektrisch leitende Außenhülle (29) umfasst, die elektrisch von einem elektrisch leitenden Zentralkern (27) isoliert ist, wobei das Werkzeug (20) umfasst:
- im Bereich des ersten Teilstücks: elektrische Kontaktmittel zwischen dem Zentralkern (27) des Koaxialkabels und der ersten Elektrode (21), und elektrische Kontaktmittel zwischen der Außenhülle (29) des Koaxialkabels und der zweiten Elektrode (22),
- im Bereich des zweiten Teilstücks: elektrische Kontaktmittel zwischen dem Zentralkern (27) des Koaxialkabels und der ersten Elektrode (21), und elektrische Kontaktmittel zwischen der Außenhülle (29) des Koaxialkabels und der zweiten Elektrode (22).

2. Werkzeug (20) nach Anspruch 1, wobei der Zentralkern (27) des Koaxialkabels (26) über eine Schicht (28) aus elektrisch isolierendem Material von der Außenhülle (29) getrennt ist, wobei der Zentralkern und die Schicht aus elektrisch isolierendem Material im Bereich des ersten Teilstücks (241) und/oder des zweiten Teilstücks (242) Abschnitte des Koaxialkabels bilden, die nicht von der Außenhülle bedeckt sind.

3. Werkzeug (20) nach Anspruch 2, wobei im Bereich des ersten Teilstücks (241) und/oder des zweiten Teilstücks (242) der elektrische Kontakt zwischen dem Zentralkern (27) des Koaxialkabels (26) und der ersten Elektrode (21) im Bereich eines Endes (271, 272) des Koaxialkabels (26) ausgeführt ist, das elektrisch mit dem Zentralkern (27) verbunden ist, und der elektrische Kontakt zwischen der Außenhülle (29) des Koaxialkabels (26) und der zweiten Elektrode (22) im Bereich einer Umfangsfläche (290) der Außenhülle ausgeführt ist.

4. Werkzeug (20) nach Anspruch 3, wobei jede Umfangsfläche (290) der Außenhülle (29) auf einer Umfangsvergrößerung der Außenhülle eingerichtet ist.

5. Werkzeug (20) nach einem der Ansprüche 2 bis 4, wobei im Bereich des ersten Teilstücks (241) und/oder des zweiten Teilstücks (242) ein elektrisch isolierendes Material (23), welches die erste Elektrode (21) von der zweiten Elektrode (22) trennt, jeden Abschnitt des Koaxialkabels, der nicht von der Außenhülle (29) bedeckt wird, mindestens teilweise bedeckt.

6. Werkzeug (20) nach einem der vorstehenden Ansprüche, wobei ein Ende des Koaxialkabels (26) im Inneren des ersten Teilstücks (241) translationsbeweglich ist, und dazu ausgebildet ist, im Inneren des ersten Teilstücks auf einer vordefinierten Hublänge (Lc) zu gleiten.

7. Werkzeug (20) nach Anspruch 6, wobei im Bereich des ersten Teilstücks (241) die elektrischen Kontaktmittel des Zentralkerns (27) Haltemittel (212) umfassen, die dazu ausgebildet sind, die erste Elektrode (21) und den Zentralkern (27) des Koaxialkabels (26) auf der gesamten Hublänge (Lc) in Kontakt zu halten, und die elektrischen Kontaktmittel der Außenhülle (29) translatorische Schleifkontaktmittel sind.

8. Werkzeug (20) nach einem der Ansprüche 6 bis 7, wobei das Ende des Koaxialkabels (26) Anschlagmittel umfasst, die mit einer Wand eines Innenhohlraums des ersten Teilstücks (241) zusammenwirken, sodass der Hub des Endes auf der Seite der Gelenkverbindung (25) begrenzt wird.

9. Werkzeug (20) nach einem der vorstehenden Ansprüche, wobei das Koaxialkabel (26) im Inneren des ersten Teilstücks (241) drehbeweglich ist, und die elektrischen Kontaktmittel im Bereich des ersten Teilstücks drehende Schleifkontaktmittel sind.

10. Werkzeug (20) nach einem der Ansprüche 6 bis 9, wobei die elektrischen Kontaktmittel der Außenhülle (29) des Koaxialkabels (26) im Bereich des ersten Teilstücks (241) ein ringförmiges Teil (295) umfassen, das die Außenhülle umgibt und mit dem Koaxialkabel drehfest ist, wobei das ringförmige Teil mit der zweiten Elektrode (22) des ersten Teilstücks (241) in Schleifkontakt steht.

11. Werkzeug (20) nach Anspruch 10, wobei das ringförmige Teil (295) mehrere Kontaktfinger (296) umfasst, die um das ringförmige Teil herum verteilt sind, wobei die Kontaktfinger auf einer Innenfläche der der zweiten Elektrode (22) des ersten Teilstücks (241) anliegen.

12. Werkzeug (20) nach einem der vorstehenden Ansprüche, umfassend Spannmittel, die dazu ausgebildet sind, das Koaxialkabel (26) im Inneren des zweiten Teilstücks (242) dreh- und translations-unbeweglich zu halten.

13. Werkzeug (20) nach einem der vorstehenden Ansprüche, wobei die Gelenkverbindung (25) eine Verbindung vom Kugelgelenktyp ist.

14. Werkzeug (20) nach einem der vorstehenden Ansprüche, das von einer Vielzahl von Teilstücken gebildet wird, die in reversibler Weise Ende an Ende aneinandergefügt sind.

15. Vorrichtung (10) zur Stimulation von Bohrlöchern (30), **dadurch gekennzeichnet, dass** sie ein Werkzeug (20) nach einem der vorstehenden Ansprüche, und eine elektrische Quelle (40) umfasst, die an das Stimulationswerkzeug angeschlossen ist.

## Claims

1. An electric well (30) stimulation tool (20), having a first electrode (21) and a second electrode (22) forming a stimulation head (200) in the area of one end of the tool, said tool (20) comprising at least a first segment (241) and a second segment (242), the first segment and the second segment being joined by an articulated link (25), **characterized in that** said second electrode in the area of the first segment and the second segment is a peripheral electrode electrically insulated from said first electrode, and **in that** a coaxial cable (26) is disposed inside the articulated link (25), said coaxial cable extending from the first segment (241) to the second segment (242), said coaxial cable comprising an electrically conductive outer envelope (29), electrically insulated from an electrically conductive central core (27), the tool (20) comprising:
- in the area of the first segment: means of electrical contact between the central core (27) of the coaxial cable and the first electrode (21), and means of electrical contact between the outer envelope (29) of said coaxial cable and the second electrode (22),
- in the area of the second segment: means of electrical contact between the central core (27) of the coaxial cable and the first electrode (21), and means of electrical contact between the outer envelope (29) of said coaxial cable and the second electrode (22).

2. The tool (20) as claimed in claim 1, wherein the central core (27) of the coaxial cable (26) is separated from the outer envelope (29) by a layer (28) of electrically insulating material, said central core and said layer of electrically insulating material forming, in the area of the first segment (241) and/or the second segment (242), portions of the coaxial cable not covered by the outer envelope.

3. The tool (20) as claimed in claim 2, wherein, in the area of the first segment (241) and/or the second segment (242), the electrical contact between the central core (27) of the coaxial cable (26) and the first electrode (21) is realized in the area of one end (271, 272) of the coaxial cable (26) electrically connected to the central core (27), and the electrical contact between the outer envelope (29) of the coaxial cable (26) and the second electrode (22) is realized in the area of a peripheral surface (290) of said outer envelope.

4. The tool (20) as claimed in claim 3, wherein each peripheral surface (290) of the outer envelope (29) is disposed at a peripheral enlargement of said outer envelope.

5. The tool (20) as claimed in one of claims 2 to 4, wherein in the area of the first segment (241) and/or the second segment (242) an electrically insulating material (23) separating the first electrode (21) from the second electrode (22) covers at least partly each portion of the coaxial cable not covered by the outer envelope (29).

6. The tool (20) as claimed in one of the preceding claims, wherein one end of the coaxial cable (26) is movable in translation inside the first segment (241), and is adapted to slide inside said first segment for a predefined length of travel (Lc).

7. The tool (20) as claimed in claim 6, wherein in the area of the first segment (241) the means of electrical contact of the central core (27) comprise holding means (212) adapted to hold the first electrode (21) and the central core (27) of the coaxial cable (26) in contact for the entire travel length (Lc), and the means of electrical contact of the outer envelope (29) are sliding means of contact in translation.

8. The tool (20) as claimed in one of claims 6 to 7, wherein the end of the coaxial cable (26) comprises means of abutment which cooperate with a wall of an internal cavity of the first segment (241) so as to bound the travel of said end on the side with the articulated link (25).

9. The tool (20) as claimed in one of the preceding claims, wherein the coaxial cable (26) is movable in rotation inside the first segment (241) and the means of electrical contact in the area of said first segment are sliding means of contact in rotation.

10. The tool (20) as claimed in one of claims 6 to 9, wherein the means of electrical contact of the outer envelope (29) of the coaxial cable (26) in the area of the first segment (241) comprise an annular part (295) surrounding said outer envelope and rotationally fixed to said coaxial cable, said annular part being in sliding contact with the second electrode (22) of the first segment (241).

11. The tool (20) as claimed in claim 10, wherein the annular part (295) comprises a plurality of contact fingers (296) distributed about said annular part, said contact fingers bearing against an inner surface of the second electrode (22) of the first segment (241).

12. The tool (20) as claimed in one of the preceding claims, comprising clamping means adapted to hold the coaxial cable (26) immobile in rotation and in translation inside the second segment (242).

13. The tool (20) as claimed in one of the preceding claims, wherein the articulated link (25) is a link of ball joint type.

14. The tool (20) as claimed in one of the preceding claims, formed by a plurality of segments assembled end to end in reversible manner.

15. A well (30) stimulation device (10), **characterized in that** it comprises a tool (20) as claimed in one of the preceding claims, and an electrical source (40) connected to said stimulation tool.
